# EUROPÄISCHE PATENTSCHRIFT

(11) **EP 4 035 187 B1**
(45) Veröffentlichungstag und Bekanntmachung des Hinweises auf die Patenterteilung: **05.11.2025**
(21) Anmeldenummer: 20785900.0
(22) Anmeldetag: 25.09.2020
(51) Int. Cl.: H01B 15/00

(54) **VORRICHTUNG ZUM ZERLEGEN VON DRAHTSEILEN**
DEVICE FOR DISASSEMBLING STRANDED WIRES
DISPOSITIF DE DÉMONTAGE DES FILS TORONÉS

(30) Priorität: 26.09.2019 AT 508202019
(43) Veröffentlichungstag der Anmeldung: 03.08.2022
(73) Patentinhaber: Zeck Holding GmbH, 96110 Schesslitz (DE)
(72) Erfinder: RIESER, Franz, 5630 BAD HOFGASTEIN (AT)
(74) Vertreter: Babeluk Patentanwälte GmbH
(86) Internationale Anmeldenummer: PCT/AT2020/060346
(87) Internationale Veröffentlichungsnummer: WO 2021/056041

(56) Entgegenhaltungen:
- EP-A2- 0 105 668
- EP-A2- 0 132 106
- AT-A4- 505 038
- FR-A1- 2 351 475
- US-A- 3 612 412
- US-B2- 9 881 718

## Beschreibung

Die Erfindung betrifft ein Vorrichtung zum Zerlegen von Drahtseilen, die aus einem Verbund unterschiedlicher Werkstoffe bestehen, mit einer Schäleinrichtung mit einer Öffnung, durch die ein Innenabschnitt des Drahtseils entlang einer Durchführachse und einer Durchführrichtung hindurchläuft, während zumindest ein Teil eines Außenabschnitts abgetrennt wird, diese Schäleinrichtung einen Dorn aufweist, durch den die Öffnung axial hindurchgeht, wobei neben dem Dorn mindestens ein drehbares Schneidrad vorgesehen ist, das an seinem Umfang zumindest ein Messer aufweist und dessen Drehachse im Wesentlichen quer zur Durchführachse steht.

Sie betrifft auch ein Verfahren zur Zerlegung von Drahtseilen, bei dem ein Drahtseil durch eine Schäleinrichtung mir einem Dorn hindurchgeführt wird, wobei ein Innenabschnitt durch eine Öffnung entlang einer Durchführachse im Dorn geführt wird und zumindest ein Teil eines Außenabschnitts über eine Außenfläche des Dorns abgeschält wird.

Solche Vorrichtungen sind besonders sinnvoll, wenn die einzelnen Werkstoffe des Drahtseils wiederverwendet oder recycelt werden sollen. Dabei handelt es sich oft um ein Drahtseil oder Seil mit einer Seele als Innenabschnitt und mehreren vorzugsweise helikal darum angeordneten Einzeldrähten, besonders vorzugsweise aus Aluminium als Außenabschnitt. Die Seele kann aus Stahl sein und kann aus Litzen bestehen oder auch ein Einzeldraht sein. Beispielsweise sind Leiterseile für Hochspannungsleitungen solche Drahtseile, also zum Stromtransport dienende Seile, beispielsweise von Freileitungen.

Es ist bereits bekannt, dass es sinnvoll ist, dazu den Außenabschnitt über rotierende Messer abzuschneiden. In der US 9,881,718 B2 und der FR 2351475 A1 wird beispielsweise vorgeschlagen, dass direkt am Innenabschnitt vorbeibewegte Räder den Außenabschnitt abtragen. Dies ist aber unvorteilhaft, da oft Teile des Innenabschnitts ebenso abgetragen werden oder der Außenabschnitt unvollständig abgetragen wird.

In der AT 505 038 A1 wird eine Vorrichtung zur Zerlegung beschrieben, bei der die Messer eines Schneidrads mit einer Drehachse parallel zur Durchführachse angeordnet ist. Diese Vorrichtung ermöglicht eine sehr gute Stückelung des Außenabschnittes. Jedoch ist die Durchführgeschwindigkeit des Drahtseils begrenzt, da es sonst sehr oft zu Verkantungen mit dem Schneidrad oder schlecht getrennten Au-ßenabschnittsstücken kommt. Dies führt bei langen Drahtseilen zu einer langen Bearbeitungszeit. Darüber hinaus sind die Abschnitte recht lang, was zu einem sehr großen Volumen der anfallenden Stücke führt. Dies verschwierigt die Handhabung und den Transport der Stücke des Außenabschnitts. Darüber hinaus sind die so freigelegten Innenabschnitte schlecht auf einer Spuleinrichtung aufwickelbar und verschmutzen oft.

Die EP 0 105 668 A2 und die EP 0 132 106 A2 beschreibt eine Ausführung mit einem Schneidrad, welches eine Drehachse quer zur Durchführachse aufweist. Damit können etwas höhere Durchsatzgeschwindigkeiten des Drahtseils erreicht werden. Diese Ausführung weist nur eine Säge auf, da durch die helikale Anordnung der äußeren Drähte jedes Drahtseil nach einer bestimmten Länge abgeschnitten wird. Jedoch kann es nach wie vor zu Verkeilungen des Schneidrades mit noch nicht abgetrennten, aber vom Dorn bereits weggedrückten Teilen des Außenabschnittes kommen. Dies limitiert die Durchsatzgeschwindigkeit und damit die maximale durchgesetzte Seillänge pro Zeit.

In der US 3,612,412 A wird eine Schälvorrichtung beschrieben, die zuerst mittels eines quer zur Längsachse des Drahtes bewegbaren, konkaven Messers den Au-ßenabschnitt in regelmäßigen Abständen einschneidet und danach stromabwärts die Außenabschnittsteile über zwei Schneidräder auf gleicher Höhe ebenso eingeschnitten und vom Innenabschnitt entfernt. Dazu sind die Schneidprofile der Messer auf den gegenüberliegenden Schneidrädern konkav und derart aufeinander abgestimmt, dass sie den gesamten Umfang des Innenabschnitts umfassen. Damit dies möglich ist, müssen die Messer sehr genau eingestellt werden und der Draht sehr ruhig und ohne Schwingungen geführt werden. Radiale Bewegungen würden ansonsten zu einer Verletzung des Innenabschnitts führen. Dies ist sehr schwierig zu bewerkstelligen, wartungsintensiv und nur bei geringen Durchsatzgeschwindigkeiten des Drahtseils möglich.

Aufgabe der Erfindung ist damit, die beschriebenen Nachteile zu vermeiden und eine Vorrichtung der genannten Art bereitzustellen, die eine erhöhte Produktivität aufweist.

Diese Aufgabe wird erfindungsgemäß dadurch gelöst, dass ein Schneidprofil des Messers oder ein gemeinsames Schneidprofil der Messer konkav geformt ist und an die Form einer Außenwand des Dorns angepasst ist, und dass das zumindest eine Messer dazu eingerichtet ist, den zumindest einen Teil des Außenabschnitts über eine Außenfläche des Dorns abzuschneiden.

Sie wird auch dadurch gelöst, dass ein Außenabschnitt über eine Außenfläche des Dorns durch zumindest ein Messer zumindest eines Schneidrades mit einer Drehachse quer zur Durchführachse, das ein konkaves Schneidprofil ausbildet, welches an die Form einer Außenwand des Dorns angepasst ist, abgeschnitten wird.

Durch das konkave Schneidprofil schneidet das Messer oder schneiden die Messer während einer Umdrehung einen größeren Teil des Außenabschnitts ab. So können bei einer Litzenanordnung mehr Einzeldrähte der Außenabschnitte abgetrennt werden. Damit werden einerseits die abgeschnittenen Abschnitte kürzer und andererseits werden auch insbesondere jene Teile des Außenabschnitts abgeschnitten, die sich im Bereich des Schneirades befinden. Damit sinkt das Risiko, dass es zu Verkantungen zwischen Schneidrad und Teilen des Außenabschnittes kommt. Dies ermöglicht eine Erhöhte Durchsatzgeschwindigkeit und damit erhöhte Produktivität pro Zeit. Darüber hinaus besitzt die erfindungsgemäße Vorrichtung einen äußerst einfachen Aufbau und ist kostengünstig herstellbar.

Vorzugsweise weist die Vorrichtung eine Zufuhreinrichtung zur Zufuhr der zu zerlegenden Drähte auf. Dabei ist mit Zuführeinrichtung eine Einrichtung gemeint, welche das Drahtseil in geeigneter Weise in Richtung der Schäleinrichtung führt, beispielsweise kann dies eine Rolle oder ein Rollenpaar sein.

Während der Drehung des Schneidrads entsteht ein durch das Messer oder die Messer definiertes Schneidprofil, das sich entlang der Dicke des Schneidrads aus den von der Drehachse am weitest entfernten Kantenpunkten der Schneiden der Messer zusammensetzt. Während der Rotation bewegen sich die Messer an einer Außenfläche des Dorns vorbei. Dabei ist jenes Profil als Schneidprofil gemeint, dass sich quer zu der Außenfläche ausbildet. Im einfachsten Fall ist ein Messer oder mehrere Messer mit der gleichen Schneide angeordnet. Dann ergibt sich das Schneidprofil aus dem Profil der einen Schneide, oder das gemeinsame Schneidprofil entspricht den identischen Profilen jeder Schneide. Sind Messer mit unterschiedlich geformten oder unterschiedlich angeordneten Schneiden vorgesehen, so bildet sich durch die Drehung des Schneidrades ein gemeinsames Schneidprofil, dass sich aus Teilen der Schneiden zusammensetzt.

Dabei werden unter konkaven Schneidprofilen nicht nur knickfreie, kurvige sondern auch solche Schneidprofile mit Knicken bzw. Kanten verstanden. Mit konkaven Schneidprofil ist dabei ein konkaves Profil ausgehend von der Drehachse des Schneidrades gemeint, also ein Profil, bei dem von der Drehachse aus gesehen jede Verbindungsstrecke zweier Punkte des Schneidprofils außerhalb des Schneidprofils liegt. Kleinere Ausbuchtungen oder Vorsprünge stören dabei nicht, wichtig ist, dass das Schneidprofil konkav ist und somit eine Ausnehmung bildet, in der der Innenabschnitt zumindest teilweise anordenbar ist.

Neben dem Messer oder den Messern können auch weitere Werkzeuge auf dem Schneidrad angeordnet sein, beispielsweise Biegeelemente zum Biegen der abzutrennenden Außenbereiche.

Erfindungsgemäß weist ein Messer eine Schneide auf, die konkav geformt ist. Damit reicht ein einziges Messer am Schneidrad aus, um ein konkaves Schneidprofil bei einer Umdrehung zu erzeugen und so den Innenabschnitt freizulegen. Alternativ können mehrere Messer ein gemeinsames Schneidprofil bilden, welches konkav ist.

In diesem Sinne ist auch vorteilhaft, wenn das Schneidprofil U-förmig oder V-förmig ausgebildet ist. Damit ist eine einfache und leicht zu fertigende Form gefunden, die mit nur einem oder nur wenigen Messern erreichbar ist. Dem entsprechend besonders vorteilhaft ist, wenn zumindest ein Messer eine Schneide mit einem Basisabschnitt aufweist, welcher im Wesentlichen parallel zur Drehachse seines Schneidrades liegt und dass die Schneide zumindest einen Seitenabschnitt aufweist, welcher schräg zur Drehachse seines Schneidrades liegt.

In einer bevorzugten Ausführungsform ist vorgesehen, dass an beiden Seiten des Basisabschnitts je zumindest ein Seitenabschnitt angeordnet sind. Damit wir der Innenabschnitt an beiden Seiten umgriffen und es kann ein besonders großer Teil des Außenabschnitts abgetragen werden.

Besonders vorteilhaft ist auch, wenn das Schneidprofil während des Betriebs der Vorrichtung den Innenabschnitt teilweise umgreift.

Um auch bei hohen Drehzahlen Unwucht zu vermeiden und um Außenabschnitte gleicher Größen zur erreichen, kann vorgesehen sein, dass die Schäleinrichtung mehrere Schneidräder aufweist, welche gleichmäßig um die Durchführachse angeordnet sind.

Um eine gute und saubere Abtrennung der Teile des Außenabschnitts zu ermöglichen, kann vorgesehen sein, dass das Messer oder die Messer während des Betriebs der Vorrichtung eine Bahn beschreiben, die mit einem geringen Spalt einer Außenfläche des Dorns vorbeitritt. Besonders vorteilhaft ist dabei, wenn der Spalt kleiner als 2 mm ist und vorzugsweise kleiner ist als der Durchmesser der Einzeldrähte des Außenabschnittes.

Um ein gleichmäßiges Gleiten des Außenabschnitts am Dorn zu ermöglichen und eine gute Trennung zu erzielen kann vorgesehen sein, dass der Dorn eine Außenfläche mit einem kegelstumpfförmigen Abschnitt und vorzugsweise einen daran angrenzenden zylindrischen Abschnitt aufweist.

Weiters kann vorgesehen sein, dass der Dorn zumindest im Übergangsbereich vom kegelstumpfförmigen Abschnitt in den zylindrischen Abschnitt ein Ringelement aufweist, welches vorzugsweise aus Stahl gefertigt ist.

Darüber hinaus kann vorteilhaft sein, wenn das Schneidrad auf Höhe des zylindrischen Abschnittes angeordnet ist und sich der Spalt zwischen der Bahn der Messer und dem Übergangsbereich vom kegelstumpfförmigen in den zylindrischen Abschnitt aufweist.

Um noch kürzere Stücke des Außenabschnittes zu erhalten ist vorteilhaft, wenn die Schäleinrichtung zwei Schneidräder aufweist, welche gegenüberliegend um die Durchführachse angeordnet sind und dass die Schneidprofile einen Querschnitt der Außenfläche des Dorns im Wesentlichen umfassen. Damit wird eine möglichst vollständige Befreiung des Innenabschnitts vom Außenabschnitt erreicht, wobei auf allen Seiten der Außenabschnitt abgetrennt wird. Abhängig der Position des Schneidrads kann vorteilhaft sein, wenn die Schneidprofile einen Querschnitt der Außenfläche des Dorns im Wesentlichen umfassen, nämlich wenn die Schneidräder so angeordnet sind, dass die Schneidprofile im Bereich der Außenfläche des Dorns die Außenabschnitte schneiden.

Damit das Drahtseil der Schäleinrichtung zugeführt und bereitgestellt wird, kann vorgesehen sein, dass die Vorrichtung eine Zugeinrichtung zur Ausübung einer Zugkraft auf das Drahtseil, vorzugsweise auf den durch die Öffnung der Schäleinrichtung hindurchgetretenen Innenabschnitt des Drahtseils aufweist. Dem entsprechend kann auch vorgesehen sein, dass der Innenabschnitt durch eine Zugeinrichtung stromabwärts des Dorns durch den Dorn gezogen wird.

Es kann auch vorgesehen sein, dass die Zugeinrichtung stromaufwärts des Dorns angeordnet ist. Insbesondere bei Ausführungen, die direkt während der Demontage eines Drahtseils beispielsweise von einem Hochspannungsmast oder einem Freileitungsmast verwendet werden, kann dies vorteilhaft sein. Dem entsprechend kann vorteilhaft sein, wenn das Drahtseil durch eine Zugeinrichtung stromaufwärts des Dorns bewegt wird.

Dabei kann die Zugeinrichtung hydraulisch angetrieben sein oder alternativ auch elektrisch. Die Schäleinrichtung wird vorzugsweise elektrisch betrieben, kann aber auch hydraulisch ausgeführt seinVorzugsweise erreicht die Zugeinrichtung eine Durchsatzgeschwindigkeit von mindestens 3 km/h, besonders vorzugsweise zumindest 4 km/h.

Damit die Durchsatzgeschwindigkeit des Drahtseils eingestellt werden kann, ist vorteilhaft, wenn eine Einstelleinrichtung zur Regelung und Einstellung der Geschwindigkeit der Zugeinrichtung mit der Zugeinrichtung verbunden ist. Dem entsprechend ist auch vorteilhaft, wenn die Zugsgeschwindigkeit der Zugeinrichtung regelbar ist.

Mit einer Schäleinrichtung können Drahtseile mit ein- bis dreischichtigen Außenabschnitten besonders gut abgeschält werden. Sind mehrere Lagen auf dem Innenabschnitt angeordnet, so kann die Leistung der Schälmaschine nicht mehr ausreichend sein. Insbesondere in einem solchen Fall kann es vorteilhaft sein, wenn die Vorrichtung zumindest zwei Schäleinrichtungen aufweist, welche entlang des Drahtseils seriell hintereinander angeordnet sind und dass eine erste, stromaufwärtige Schäleinrichtung eine größere Öffnung aufweist als eine zweite, stromabwärtige Schäleinrichtung. Die Schäleinrichtungen sind mit anderen Worden hintereinander angeordnet, vorzugsweise entlang der Durchführrichtung Z. Dem entsprechend kann auch vorteilhaft sein, wenn zuerst ein äußerer Teil des Außenabschnittes durch eine erste Schäleinrichtung abgeschält wird und danach ein innerer Teil des Außenabschnitts durch eine zweite Schäleinrichtung abgeschält wird.

Damit eine besonders einfache Weiterverarbeitung der Teile der Außenabschnitte erreicht wird, kann vorgesehen sein, dass die abgetrennten Teile des Außenabschnittes auf eine durchschnittliche Länge geschnitten werden, die kleiner ist als 70 mm und die vorzugsweise kleiner ist als 60 mm.

Besonders vorteilhaft ist, wenn das Schneidrad mit einer Drehzahl angetrieben wird, die größer ist als 500 min⁻¹ und die vorzugsweise größer ist als 550 min⁻¹, besonders vorzugsweise etwa 600 min⁻¹. Damit wird verhindert, dass es zu langen Teilen des Außenabschnittes kommt und zusätzlich wird das Risiko des Hängenbleibens oder Verkantens des Schneidrades verringert.

Weiters wird das Risiko des Verkantens weiter reduziert, wenn vorgesehen ist, dass sich alle Schneidräder im Bereich des Drahtseils in Richtung einer Durchführrichtung des Innenabschnittes drehen.

Vorteilhaft ist, wenn die Vorrichtung zumindest einen Auffangbehälter für die abgetrennten Teile des Außenabschnittes aufweist. Dazu kann beispielsweise der Dorn in einer Wanne zur Aufnahme der Teile des Außenabschnitts angeordnet ist. Der Auffangbehälter kann beispielsweise ein Big-Bag, ein Container oder ein anderes geeignete Lagerhülle sein.

Darüber hinaus kann vorgesehen sein, dass die Vorrichtung stromabwärts des Dorns zumindest eine Spuleinrichtung zum Aufwickeln des Innenabschnittes aufweist. Damit wir der freigelegte Innenabschnitt platzsparend zur Wiederverwendung oder zum Recycling bereitgelegt. Dem entsprechend kann auch vorteilhaft sein, wenn der Innenabschnitt des Drahtseils stromabwärts des Dorns auf eine Spuleinrichtung aufgewickelt wird.

Die Spuleinrichtung weist in der Regel zumindest eine Spule auf, auf die der Innenabschnitt aufgerollt wird. Dabei kann die Spuleinrichtung ebenso eine Zugkraft auf den Innenabschnitt ausüben, um eine straffe Spulung zu erreichen. Dazu kann die Spuleinrichtung motorisiert sein, oder hydraulisch betrieben sein. Dabei kann die Spuleinrichtung die Aufgabe der Zugeinrichtung übernehmen oder zusätzlich zur Zugeinrichtung Kraft auf den Drahtseil ausüben, wobei im letzteren Fall die Zugkraft der Spuleinrichtung geringer ist als die Zugkraft der Zugeinrichtung.

Zur besonders schnellen und effizienten Verarbeitung eines nicht mehr gebrauchten Drahtseils odas Drahtseilteils ist ein Verfahren zur Wartung oder Demontage einer Stromleitung, insbesondere einer Hochspannungsleitung, vorteilhaft, wobei ein Drahtseil oder ein Teil eines Drahtseiles von seinen Verankerungen, beispielsweise Verankerungen mit einem Freileitungsmast, gelöst wird, abgezogen wird, durch ein Verfahren wie beschrieben zerlegt wird und der Innenabschnitt danach auf einer Spuleinrichtung aufgerollt wird. Damit kann sehr schnell und einfach vorgegangen werden und eine sofortige Auftrennung der verschiedenen Materialien erreicht werden.

Unter Lösung von den Verankerungen ist damit gemeint, dass das Drahtseil oder das Drahtseilteil zumindest entlang seiner Längserstreckung ziehbar gemacht wird. Damit umfasst ist also auch das bloße Lockern der Verankerungen, wodurch die Zugeinrichtung das Drahtseil oder das Drahtseilteil dann aus den Verankerungen herausziehen kann. Alternativ können auch Rollen in den Bereichen der Verankerungen vorgesehen werden, auf welchen das Drahtseil oder das Drahtseilteil entlang der Längserstreckung beweglich angeordnet wird.

Die Zugeinrichtung und/oder die Spuleinrichtung können mit der Schäleinrichtung gemeinsam ausgeführt sein, also beispielsweise in einem gemeinsamen Gehäuse, oder können auch als von einander getrennte Module vorliegen, wobei die Module miteinander steuerungstechnisch und/oder kraftübertragend verbunden sein können. In einer bevorzugten Ausführungsform sind die Zugeinrichtung, die Schäleinrichtung und die Spuleinrichtung voneinander getrennte Teile, wobei für den Betrieb die Schäleinrichtung entlang des Drahtseils zwischen Zugeinrichtung und Spuleinrichtung angeordnet wird. Die Zugeinrichtung zieht mit großer Kraft das Drahtseil, beispielsweise von Freileitungsmasten ab und stellt sie der Schälvorrichtung bereit. Der vom Außenabschnitt befreite Innenabschnitt wird stromabwärts der Schälvorrichtung an der Spuleinrichtung aufgerollt.

Besonders vorteilhaft ist, wenn vorgesehen ist, dass das Abziehen und das Verfahren zur Zerlegung des Drahtseils oder Teil des Drahtseils und Aufrollen auf der Spuleinrichtung in einem Arbeitsgang durchgeführt wird. Damit kann das Verfahren zur Zerlegung des Drahtseils oder Teil des Drahtseils und Aufrollen auf der Spuleinrichtung direkt nach dem Lösen des Drahtseils oder Teil des Drahtseils aus seinen Verankerungen erfolgen. Damit wird das Aufrollen des noch unaufgetrennten Drahtseils, Transportieren und anschließendes Auftrennen nicht mehr nötig, was zu einer erleichterten Logistik und Erhöhung der Effizienz führt.

Besonders vorteilhaft ist, wenn das Drahtseil oder Teil des Drahtseils von den Verankerungen eines Freileitungsmast beweglich gemacht und im Bereich der Verankerungen gelagert wird, vorzugsweise auf Rollen, und abgezogen wird. Insbesondere bei Hochspannungsleitungen und anderen Leitungen, welche in großen Höhen an Freileitungsmasten befestigt sind, können so mit möglichst wenig Aufwand und ohne den Untergrund unter den Masten zu beanspruchen verarbeitet werden. Es muss nicht mehr das Drahtseil oder das Drahtseilteil vom Freileitungsmast abgeworfen werden, sondern er wird einfach entlang der Masten abgezogen.

In diesem Sinne ist es ganz besonders vorteilhaft, wenn an der der Schäleinrichtung abgewandten Seite des Drahtseils oder Teil des Drahtseils ein neues Drahtseil befestigt wird, bevor es, vorzugsweise durch eine Zugeinrichtung, abgezogen wird. Damit wird gleichzeitig das neue Drahtseil in Position gebracht und verhindert, dass das zu entfernende Drahtseil zwischen den Freileitungsmasten auf den Untergrund abgleitet.

Mit stromaufwärts oder stromabwärts sind stets Richtungs- oder Positionsangaben in Bezug zur Durchführrichtung gemeint, also entlang der Bewegungsrichtung, in die das Drahtseil bewegt wird.

In der Folge wird die vorliegende Erfindung anhand der in den Figuren dargestellten nicht einschränkenden Ausführungsvarianten näher erläutert. Es zeigen:
- Fig. 1: eine erfindungsgemäße Vorrichtung in einer ersten Ausführungsform in einem schematischen Schnitt;
- Fig. 2: eine Detaildarstellung des Dorns mit einem Teil eines Schneidrads in einem Schnitt normal zur Außenfläche des Dorns;
- Fig. 3: eine Seitendarstellung des Dorns;
- Fig. 4: eine alternative Ausführungsform in einem schematischen Schnitt.

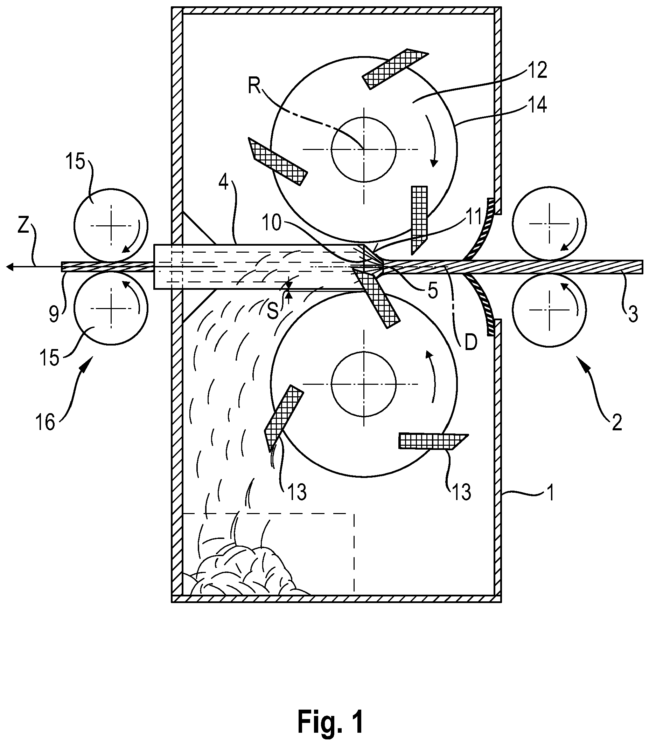

Fig. 1 zeigt eine Ausführungsform der Erfindung, die einen Dorn 4 aufweist, durch den ein Drahtseil 3 geführt wird. Die Vorrichtung weist eine Schäleinrichtung 1 mit einem Gehäuse auf, zu der das Drahtseil 3 über zwei Zuführrollen einer Zufuhreinrichtung 2 durch eine mit Gummilaschen verdeckte Öffnung zugeführt wird. Innerhalb, bzw. oberhalb der Wanne 1 ist der Dorn 4 angeordnet, der eine sich in Axialrichtung erstreckende Öffnung 5 aufweist. Stromabwärts der Wanne 1 sind Räder 15, sowie eine Spuleinrichtung (nicht dargestellt) angeordnet, wobei der freigelegte Innenabschnitt auf die einen Spulenbock der Spulenrichtung aufgerollt wird.

Das Drahtseil 3 besteht aus einem Innenabschnitt 9 und einem Außenabschnitt 10, der den Innenabschnitt 9 koaxial umgibt. Die Öffnung 5 des Dorns 4 ist so ausgebildet, dass sie zur Aufnahme des Innenabschnittes 9 mit Spiel geeignet ist, so dass lediglich der Innenabschnitt 9 durch den Dorn 4 entlang einer Durchführachse D hindurchtritt und letztlich auf einen Spulbock einer Spuleinrichtung aufgewickelt wird. Der Außenabschnitt 10 des Drahtseils 3 hingegen wird an der nach vorne konisch zulaufenden Außenfläche 11 des Dorns 4 abgeschält, wobei eine gewisse Aufteilung in Einzeldrähte erfolgt. Nach dem konischen, kegelstumpfförmigen Abschnitt der Außenfläche 11 weist sie stromabwärts einen im Wesentlichen zylindrischen Abschnitt auf, wobei der kegelstumpfförmige Abschnitt über eine Kante in den zylindrischen Abschnitt übergeht. Unmittelbar angrenzend an den Dorn 4 sind zwei um Drehachsen R drehbare, angetriebene Schneidräder 12 angeordnet, die an seinem äußeren Umfang mit mehreren Messern 13 versehen sind. Jedes Schneidrad 12 besitzt eine zylindrische Außenfläche 14. Während der Rotation der Schneidräder wird durch die Schneiden der Messer eine radial äußerste Fläche des Schneidrades 12 definiert, die im Schnitt ein Schneidprofil 6 definiert. Der Spalt S zwischen dem von den Messern 13 definierten Schneidprofil 6 und der Kante zwischen den Abschnitten der Außenfläche 11 des Dorns 4 ist sehr gering und beträgt beispielsweise 0,8 mm. Auf der Außenfläche 14 sind radial gleichmäßig insgesamt drei Messer 13 pro Schneidrad 12 angeordnet. Die Schneidräder 12 sind auf gleicher Höhe des Dorns 4 angeordnet, wobei vorgesehen sein kann, dass sie versetzt zueinander angeordnet sind.

Stromabwärts des Dorns 4 und außerhalb der Wanne 1 sind zwei motorisierte Räder 15 einer hydraulischen Zugeinrichtung 16 angeordnet, welche den freigelegten Innenabschnitt einspannen und ihn entlang einer Zugrichtung Z ziehen. Jedem Schneidrad 12 ist ein Motor zugeordnet, der es antreibt, wobei die Geschwindigkeit während des Betriebs vorzugsweise im Wesentlichen konstant gehalten wird. Dabei drehen sich die Schneidräder 12 im Betrieb gegenläufig und derart, dass sich die zum Drahtseil 3 gerichteten Teile der zylindrische Außenfläche 14 in Zugrichtung Z drehen. Damit drehen sich die Schneidräder 12 in die gleiche Richtung wie die Räder 15, die sich auf jeweils der gleichen Seite des Drahtseils 3 befinden.

Durch den Drehimpuls, den das Schneidrad durch seine Drehung mit Drehzahlen von etwa 600 min⁻¹ auf das Drahtseil 3 ausübt, wird eine vollständige Durchtrennung des Außenabschnittes gewährleistet.

Die vorliegende Erfindung ermöglicht es, eine Vorrichtung mit einfachem Aufbau darzustellen, die die Gewinnung von Recycling-Materialien hoher Qualität gewährleistet.

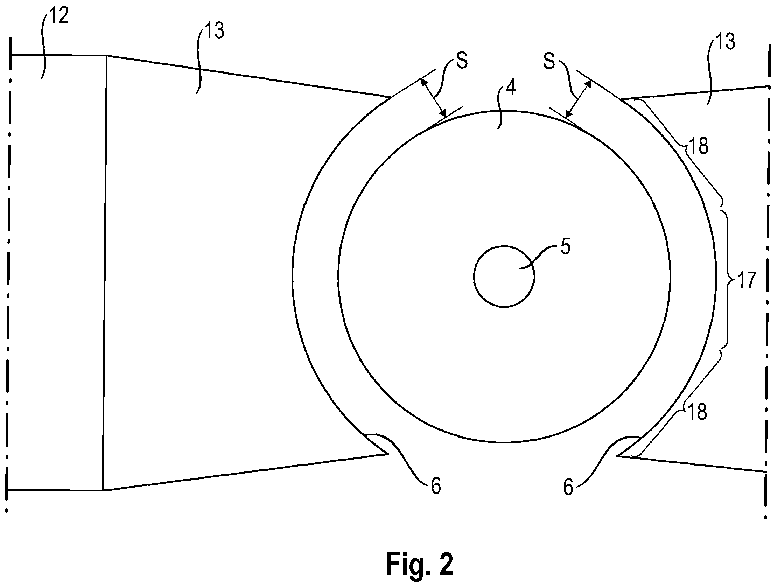

In Fig. 2 wird ein Detail der Ausführungsform aus Fig. 1 gezeigt, wobei je ein Messer 13 je eines Schneidrades 12 auf Höhe des Dorns 4 dargestellt ist. Dabei ist der Schnitt auf der Höhe der Durchführachse D gemacht, an dem die Messer 13 dem Dorn 4 während ihrer Umdrehung am nähesten kommen. Dies ist in dieser Ausführungsform der Übergangsbereich zwischen Kegelstumpfförmigen und zylindrischen Bereich. Bei dieser Ausführungsform ist dies auf Höhe des zylindrischen Abschnitts der Außenfläche 11, wodurch dieser Schnitt normal zur Durchführachse D steht. Kommen die Messer 13 der Außenfläche im konischen Bereich am nächsten, so würden zwei Schnitte für die zwei Schneidräder 13 nötig sein, die jeweils normal zu den Außenflächen 11 im Bereich der Schneidräder 13 stehen. Dabei ist sichtbar, dass die Spalten S zwischen der Außenwand 11 des Dorns 4 und den Messern 13 sehr gering ist. Jedes Messer 13 weist eine Schneide auf, die ein Schneidprofil 6 definiert, welches konkav geformt ist, eine U-Form aufweist und damit an die Form der Außenwand des Dorns 4 angepasst. Beim Vorbeidrehen des Messers am Dorn wird so ein großer Teil des sich über die Außenfläche 11 bewegenden Außenabschnitt 10 vom Messer 13 abgeschnitten. Die Messer 13 umfassen damit zumindest drei Viertel des Umfangs des Dorns 4. Dabei weist jedes Schneidprofil 6 einen Basisabschnitt 17 und an beiden Seiten des Basisabschnitts 17 je einen Seitenabschnitt 18 auf, wobei in dieser Ausführungsform der Basisabschnitt 17 in die Seitenabschnitte 18 direkt übergeht. Alternativ können im Übergangsbereich zwischen den Abschnitten 17, 18 Kanten oder starke Steigungsänderungen vorgesehen sein.

Es vorteilhaft, wenn das Schneidprofil 6 der Kontur der Außenfläche 11 des Dorns 4 entspricht. So kann ein besonders großer Teil des Außenabschnitts 10 weggeschnitten werden.

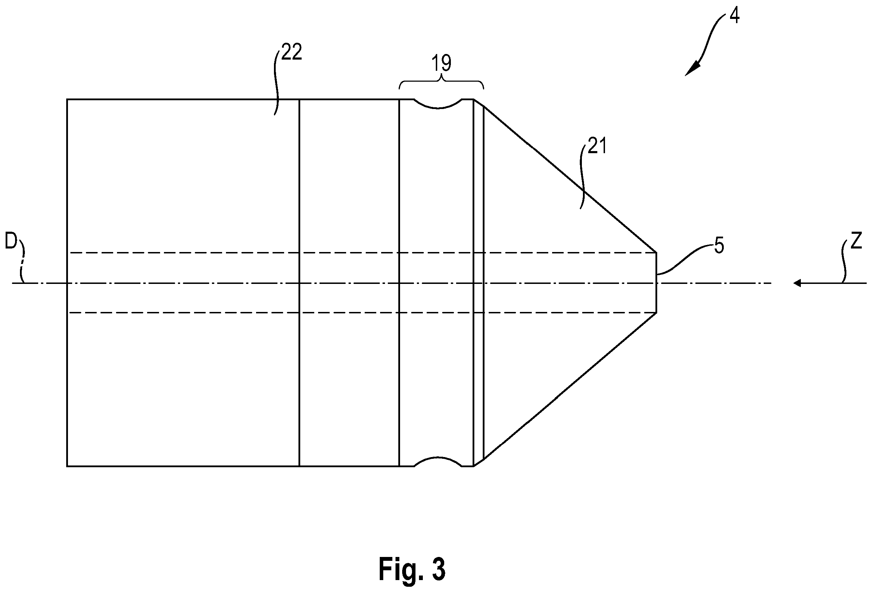

In Fig. 3 wird der Aufbau des Dorns 4 ersichtlich. Der Dorn 4 weist im Bereich der Kante am zylindrischen Teil ein Ringelement 19 auf, welches als Verstärkungselement dient und aus Stahl ist. Dabei stellt das Ringelement den letzten Teil des kegelstumpfförmigen Bereichs, den Übergangsbereich, sowie einen Teil des zylindrischen Bereichs dar. Während der Umdrehung werden die abgeschälten Teile des Außenabschnitts 10 durch die Messer 13 gegen die Kante und das Ringelement 19 gedrückt und abgeschnitten. Damit ist dieser Teil des Dorns 4 mechanisch stark belastet. Das Ringelement 19 kann bei Bedarf nachgeschliffen werden, um ein sauberes Abschneiden zu ermöglichen. Im zylindrischen Teil des Ringelements 19 ist dabei eine Einkerbung vorgesehen, die als Anhaltspunkt dienen kann, wie weit das Ringelement noch abgeschliffen werden kann.

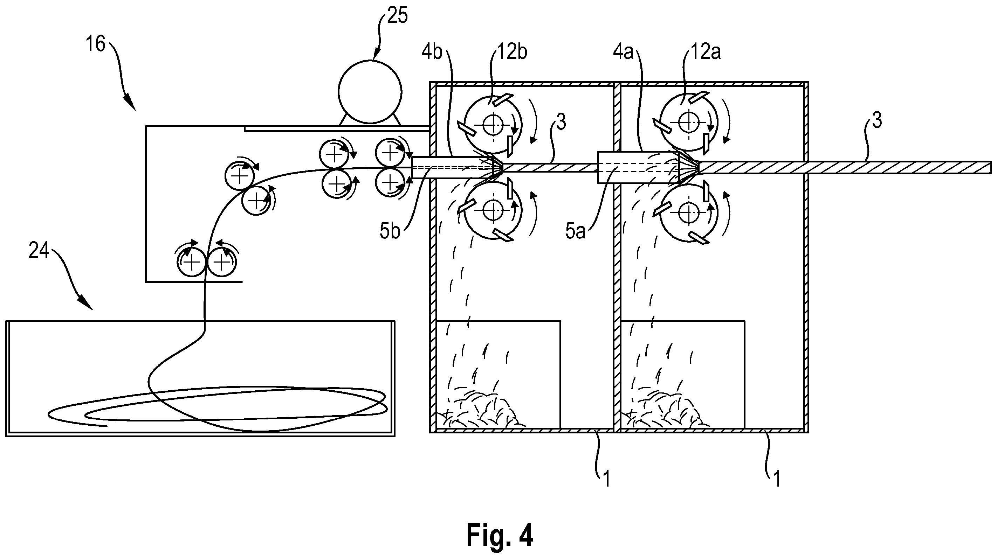

Fig. 4 zeigt eine weitere Ausführungsform, bei der zwei Schäleinrichtungen 1 hintereinander angeordnet sind. Dabei wird das Drahtseil 3 zuerst durch eine erste Schäleinrichtung 1 und im Zuge dessen durch eine Öffnung 5a eines ersten Dorns 4a mit größerem Querschnitt durchgeführt. Dabei wird ein äußerer Teil der Außenabschnitts 10 abgeschält und durch erste Schneidräder 12a abgeschnitten. Ein Teil des Außenabschnittes 10 und der Innenabschnitt 9 wird durch die erste Öffnung 5a durchgeführt. Entlang der Durchführachse D der ersten Schäleinrichtung 1 ist ein zweiter Dorn 4b einer zweiten Schäleinrichtung 1 angeordnet, welcher eine zweite Öffnung 5b mit kleinerem Querschnitt aufweist. Das Drahtseil 3 wird von der ersten Schäleinrichtung zur zweiten Schäleinrichtung geführt, wodurch diese seriell angeordnet sind. Dort wird nur noch der Innenabschnitt durch den zweiten Dorn 4b geführt und dabei der restliche Außenabschnitt 10 abgeschält und durch zweite Schneidräder 12b abgeschnitten.

Stromabwärts der zweiten Schälvorrichtung ist eine mit einem Elektromotor 25 motorisierte Zugeinrichtung 16 gezeigt, wobei stromabwärts der Zugeinrichtung 16 eine Spuleinrichtung 24 angeordnet ist, die den Innenabschnitt aufspult. Dabei wird der Innenabschnitt 9 automatisch kreisförmig in eine Metalltrommel eingelegt.

## Patentansprüche

1. Vorrichtung zum Zerlegen von Drahtseilen (3), die aus einem Verbund unterschiedlicher Werkstoffe bestehen, mit einer Schäleinrichtung (1) mit einer Öffnung (5), durch die ein Innenabschnitt (9) des Drahtseils (3) entlang einer Durchführachse (D) und einer Durchführrichtung (Z) hindurchläuft, während zumindest ein Teil eines Außenabschnitts (10) abgetrennt wird, diese Schäleinrichtung (1) einen Dorn (4) aufweist, durch den die Öffnung (5) axial hindurchgeht, wobei neben dem Dorn (4) mindestens ein drehbares Schneidrad (12) vorgesehen ist, das an seinem Umfang zumindest ein Messer (13) aufweist und dessen Drehachse (R) im Wesentlichen quer zur Durchführachse (D) steht, **dadurch gekennzeichnet, dass** ein Schneidprofil (6) des Messers (13) oder ein gemeinsames Schneidprofil (6) der Messer (13) konkav geformt ist und an die Form einer Außenwand des Dorns angepasst ist, und dass das zumindest eine Messer (13) dazu eingerichtet ist, den zumindest einen Teil des Außenabschnitts über eine Außenfläche des Dorns (4) abzuschneiden.

2. Vorrichtung nach Anspruch 1, **dadurch gekennzeichnet, dass** das Schneidprofil (6) U-förmig oder V-förmig ausgebildet ist.

3. Vorrichtung nach einem der Ansprüche 1 oder 2, **dadurch gekennzeichnet, dass** das Messer (13) oder die Messer (13) während des Betriebs der Vorrichtung eine Bahn beschreiben, die mit einem geringen Spalt (S) einer Außenfläche (11) des Dorns (4) vorbeitritt und dass der Spalt (S) vorzugsweise kleiner als 2 mm ist und/oder besonders vorzugsweise kleiner ist als der Durchmesser der Einzeldrähte des Außenabschnittes (10).

4. Vorrichtung nach einem der Ansprüche 1 bis 3, **dadurch gekennzeichnet, dass** der Dorn (4) eine Außenfläche (11) mit einem kegelstumpfförmigen Abschnitt (21) und vorzugsweise einen daran angrenzenden zylindrischen Abschnitt (22) aufweist und dass der Dorn (4) vorzugsweise zumindest im Übergangsbereich vom kegelstumpfförmigen Abschnitt (21) in den zylindrischen Abschnitt (22) ein Ringelement (19) aufweist, welches besonders vorzugsweise aus Stahl gefertigt ist.

5. Vorrichtung nach Anspruch 4, **dadurch gekennzeichnet, dass** das Schneidrad (12) auf Höhe des zylindrischen Abschnittes (22) angeordnet ist und sich der Spalt (S) zwischen der Bahn der Messer (13) und dem Übergangsbereich vom kegelstumpfförmigen (21) in den zylindrischen Abschnitt (22) aufweist.

6. Vorrichtung nach einem der Ansprüche 1 bis 5, **dadurch gekennzeichnet, dass** die Schäleinrichtung (1) zwei Schneidräder (12) aufweist, welche gegenüberliegend um die Durchführachse (D) angeordnet sind und dass die Schneidprofile (6) einen Querschnitt der Außenfläche (11) des Dorns (4) im Wesentlichen umfassen.

7. Vorrichtung nach einem der Ansprüche 1 bis 6, **dadurch gekennzeichnet, dass** die Vorrichtung eine Zugeinrichtung (16) zur Ausübung einer Zugkraft auf das Drahtseil (3), vorzugsweise auf den durch die Öffnung der Schäleinrichtung (1) hindurchgetretenen Innenabschnitt (9) des Drahtseils (3) aufweist, und dass die Zugeinrichtung (16) vorzugsweise stromaufwärts des Dorns (4) angeordnet ist.

8. Vorrichtung nach einem der Ansprüche 1 bis 7, **dadurch gekennzeichnet, dass** die Vorrichtung zumindest zwei Schäleinrichtungen (1) aufweist, welche entlang des Drahtseils (3) seriell hintereinander angeordnet sind und dass eine erste, stromaufwärtige Schäleinrichtung (1) eine größere Öffnung (5) aufweist als eine zweite, stromabwärtige Schäleinrichtung (5).

9. Verfahren zur Zerlegung von Drahtseilen (3), bei dem ein Drahtseil (3) durch eine Schäleinrichtung (1) mit einem Dorn (4) hindurchgeführt wird, wobei ein Innenabschnitt (9) durch eine Öffnung (5) entlang einer Durchführachse (D) im Dorn (4) geführt wird und zumindest ein Teil eines Außenabschnitts (10) über eine Außenfläche (11) des Dorns (4) abgeschält wird, **dadurch gekennzeichnet, dass** ein Außenabschnitt (10) über eine Außenfläche (11) des Dorns (4) durch zumindest ein Messer (13) zumindest eines Schneidrades (12) mit einer Drehachse (R) quer zur Durchführachse (D), das ein konkaves Schneidprofil (6) ausbildet, welches an die Form einer Außenwand des Dorns angepasst ist, abgeschnitten wird.

10. Verfahren nach Anspruch 9, **dadurch gekennzeichnet, dass** mehrere Messer (13) ein gemeinsames Schneidprofil (6) bilden, welches konkav ist.

11. Verfahren nach einem der Ansprüche 9 oder 10, **dadurch gekennzeichnet, dass** die abgetrennten Teile des Außenabschnittes (10) auf eine durchschnittliche Länge geschnitten werden, die kleiner ist als 70 mm und die vorzugsweise kleiner ist als 60 mm.

12. Verfahren nach einem der Ansprüche 9 bis 11, **dadurch gekennzeichnet, dass** sich alle Schneidräder (12) im Bereich des Drahtseils (3) in Richtung einer Durchführrichtung (D) des Innenabschnittes (9) drehen.

13. Verfahren nach einem der Ansprüche 9 bis 12, **dadurch gekennzeichnet, dass** zuerst ein äußerer Teil des Außenabschnitts (10) durch eine erste Schäleinrichtung (1) abgeschält wird und danach ein innerer Teil des Außenabschnitts (10) durch eine zweite Schäleinrichtung (1) abgeschält wird.

14. Verfahren zur Wartung oder Demontage einer Stromleitung, insbesondere einer Hochspannungsleitung, wobei ein Drahtseil (3) oder ein Teil eines Drahtseils (3) von seinen Verankerungen, beispielsweise Verankerungen mit einem Freileitungsmast, gelöst wird, abgezogen wird, durch ein Verfahren nach einem der Ansprüche 9 bis 13 zerlegt wird und der Innenabschnitt (9) danach auf einer Spuleinrichtung aufgerollt wird und wobei vorzugsweise das Abziehen und das Verfahren zur Zerlegung des Drahtseils (3) oder Teil des Drahtseils (3) und Aufrollen auf der Spuleinrichtung in einem Arbeitsgang durchgeführt wird.

15. Verfahren nach Anspruch 14, **dadurch gekennzeichnet, dass** an der der Schäleinrichtung (1) abgewandten Seite des Drahtseils (3) oder Teil des Drahtseils (3) ein neues Drahtseil befestigt wird, bevor es abgezogen wird.

## Claims

1. Device for deconstructing wire cables (3) made of a combination of different materials, comprising a peeling mechanism (1) having an opening (5), through which an inner portion (9) of the wire cable (3) runs along a pass-through axis (D) and a pass-through direction (Z), while at least part of an outer portion (10) is cut off, said peeling mechanism (1) having a mandrel (4), through which the opening (5) extends axially, wherein provided next to the mandrel (4) is at least one rotatable cutting wheel (12), which has at least one blade (13) on its circumference and the axis of rotation (R) of which is substantially transverse to the pass-through axis (D), **characterized in that** a cutting profile (6) of the blade (13) or a joint cutting profile (6) of the blades (13) is of concave shape and adapted to the shape of an outer wall of the mandrel (4), and **in that** the at least one blade (13) being designed to cut off at least a part of the outer portion over an outer surface (11) of the mandrel (4).

2. Device according to claim 1, **characterized in that** the cutting profile (6) is U-shaped or V-shaped.

3. Device according to any one of claims 1 or 2, **characterized in that** the blade (13) or the blades (13), during operation of the device, describe a path which passes an outer surface (11) of the mandrel (4) at a small gap (S) therefrom and **in that** the gap (S) is preferably smaller than 2 mm and particularly preferably is smaller than the diameter of the individual wires of the outer portion (10).

4. Device according to any one of claims 1 to 9, **characterized in that** the mandrel (4) has an outer surface (11) with a frustoconical portion (21) and an adjoining cylindrical portion (22) and **in that** the mandrel (4) preferably has, at least in the transition region from the frustoconical portion (21) to the cylindrical portion (22), an annular element (19) which is particularly preferably made of steel.

5. Device according to claim 4, **characterized in that** the cutting wheel (12) is arranged at the cylindrical portion (22) and the gap (S) presents itself between the path of the blades (13) and the transition region from the frustoconical portion (21) to the cylindrical portion (22).

6. Device according to any one of claims 1 to 5, **characterized in that** the peeling mechanism (1) has two cutting wheels (12) which are arranged opposite one another around the pass-through axis (D), and **in that** the cutting profiles (6) substantially encircle a cross-section of the outer surface (11) of the mandrel (4).

7. Device according to any one of claims 1 to 6, **characterized in that** the device has a pulling mechanism (16) for exerting a pulling force on the wire cable (3), preferably on the inner portion (9) of the wire cable (3) that has passed through the opening of the peeling mechanism (1) and **in that** the pulling mechanism (16) is preferably arranged upstream of the mandrel (4).

8. Device according to any one of claims 1 to 7, **characterized in that** the device has at least two peeling mechanisms (1) which are arranged in series one behind the other along the wire cable (3), and **in that** a first, upstream peeling mechanism (1) has a larger opening (5) than a second, downstream peeling mechanism (5).

9. Method for deconstructing wire cables (3), in which a wire cable (3) is conducted through a peeling mechanism (1) having a mandrel (4), wherein an inner portion (9) is conducted through an opening (5) along a pass-through axis (D) in the mandrel (4) and at least part of an outer portion (10) is peeled away by an outer surface (11) of the mandrel (4), **characterized in that** an outer portion (10) is cut off via an outer surface (11) of the mandrel (4) by at least one blade (13) of at least one cutting wheel (12) having an axis of rotation (R) transverse to the pass-through axis (D), which blade forms a concave cutting profile (6) that is adapted to the shape of an outer wall of the mandrel (4).

10. Method according to claim 9, **characterized in that** a plurality of blades (13) form a joint cutting profile (6), which is concave.

11. Method according to one of claims 9 or 10, **characterized in that** the cut-off parts of the outer portion (10) are cut to an average length which is smaller than 70 mm and which is preferably smaller than 60 mm.

12. Method according to any one of claims 9 to 11, **characterized in that** all the cutting wheels (12) in the region of the wire cable (3) rotate in the direction of a pass-through direction (D) of the inner portion (9).

13. Method according to any one of claims 9 to 12, **characterized in that** firstly an outer part of the outer portion (10) is peeled away by a first peeling mechanism (1) and then an inner part of the outer portion (10) is peeled away by a second peeling mechanism (1).

14. Method for maintaining or removing a power line, in particular a high-voltage line, wherein a wire cable (3) or part of a wire cable (3) is released from its anchorages, for example anchorages to an overhead line mast, is pulled off, is deconstructed by a method according to any one of claims 9 to 13, and the inner portion (9) is rolled up on a coiling mechanism and wherein the pulling-off and the method for deconstructing the wire cable (3) or part of the wire cable (3) and rolling it up on the coiling mechanism is carried out in one operation.

15. Method according to claim 14, **characterized in that** a new wire cable is attached to the side of the wire cable (3) or part of the wire cable (3) that is remote from the peeling mechanism (1), before the wire cable is pulled off.

## Revendications

1. Installation de démontage de fils (3) toronnés, qui sont constitués d'un composite de matériaux différents, comprenant un dispositif (1) de dénudage ayant une ouverture (5), dans laquelle un segment (9) intérieur du fil (3) toronné passe suivant un axe (D) de passage et une direction (Z) de passage, tandis qu'au moins une partie d'un segment (10) extérieur est séparé, ce dispositif (1) de dénudage a un mandrin (4), dans lequel l'ouverture (5) passe axialement, dans laquelle outre le mandrin (4), il est prévu au moins une roue (12) coupante tournante, qui a, sur son pourtour, au moins un couteau (13) et dont l'axe (R) de rotation est sensiblement transversal à l'axe (D) de passage, **caractérisée en ce qu'**un profil (6) de coupe du couteau (13) ou un profil (6) de coupe commun de coupe des couteaux (13) est conformé de manière concave et est adapté à la forme d'une paroi extérieure du mandrin et **en ce que** le au moins un couteau (13) est agencé pour couper au moins une partie du segment extérieur par une surface extérieure du mandrin (4).

2. Installation suivant la revendication 1, **caractérisée en ce que** le profil (6) de coupe est constitué en forme de U ou en forme de V.

3. Installation suivant l'une des revendications 1 ou 2, **caractérisée en ce que** le couteau (13) ou les couteaux (13) décrivent pendant le fonctionnement de l'installation une trajectoire, qui passe avec un petit intervalle (S) devant une surface (11) extérieure du mandrin (4) et **en ce que** l'intervalle (S) est de préférence plus petit que 2mm et/ou d'une manière particulièrement préférée plus petit que le diamètre des fils individuels du segment (10) extérieur.

4. Installation suivant l'une des revendications 1 à 3, **caractérisée en ce que** le mandrin (4) a une surface (11) extérieure en forme de tronc de cône et de préférence un segment (22) cylindrique qui en est voisin, et **en ce que** le mandrin (4) a de préférence au moins dans la partie de transition du segment (21) en forme de tronc de cône au segment (22) cylindrique, un élément (19) annulaire, qui est fabriqué d'une manière particulièrement préférée en acier.

5. Installation suivant la revendication 4, **caractérisée en ce que** la roue (12) de coupe est montée au niveau du segment (22) cylindrique et l'intervalle (S) s'étend entre la trajectoire des couteaux (13) et la partie de transition allant du segment (21) en forme de tronc de cône au segment (22) cylindrique.

6. Installation suivant l'une des revendications 1 à 5, **caractérisée en ce que** le dispositif (1) de dénudage a deux roues (12) de coupe, qui sont montées en opposition autour de l'axe (D) de passage et **en ce que** les profils (6) de coupe comprennent essentiellement une section transversale de la surface (11) extérieure du mandrin (4).

7. Installation suivant l'une des revendications 1 à 6, **caractérisée en ce que** l'installation a un dispositif (16) de traction pour appliquer une force de traction au fil (3) toronné, de préférence au segment (9) intérieur, ayant passé dans l'ouverture du dispositif (1) de dénudage, du fil (3) toronné et **en ce que** le dispositif (16) de traction est disposé de préférence en amont du mandrin (4).

8. Installation suivant l'une des revendications 1 à 7, **caractérisée en ce que** l'installation a au moins deux dispositifs (1) de dénudage, qui sont disposés en série l'un dernier l'autre le long du fil (3) toronné et **en ce qu'**un premier dispositif (1) de dénudage en amont a une ouverture (5) plus grande qu'un deuxième dispositif (5) de dénudage en naval.

9. Procédé de démontage de fils (3) toronnés, dans lequel on fait passer un fil (3) toronné dans un dispositif (1) de dénudage ayant un mandrin (4), dans lequel on fait passer un segment (9) intérieur dans une ouverture (5) suivant un axe (D) de passage dans le mandrin (4) et on dénude au moins une partie d'un segment (10) extérieur par une surface (11) extérieure du mandrin (4), **caractérisé en ce que** l'on coupe un segment (10) extérieur par une surface (11) extérieure du mandrin (4) par au moins un couteau (13) d'au moins une roue (12) de coupe ayant un axe (R) de rotation transversal à l'axe (D) de passage, qui constitue une profil (6) de coupe concave, lequel est adapté à la forme de la paroi extérieure du mandrin.

10. Procédé suivant la revendication 9, **caractérisé en ce que** plusieurs couteaux (13) forment un profil (6) de coupe commun, qui est concave.

11. Procédé suivant l'une des revendications 9 ou 10, **caractérisé en ce que** l'on coupe les parties séparées du segment (10) extérieur à une longueur moyenne, qui est plus petite que 70 mm et qui, de préférence, est plus petite que 60 mm.

12. Procédé suivant l'une des revendications 9 à 11, **caractérisé en ce que** toutes les roues (12) de coupe tournent dans la partie du fil (3) toronné dans une direction (D) de passage du segment (9) intérieur.

13. Procédé suivant l'une des revendications 9 à 12, **caractérisé en ce que** l'on dénude d'abord une partie extérieure du segment (10) extérieur par un premier dispositif (1) de dénudage et **en ce qu'**on dénude ensuite une partie intérieure du segment (10) extérieur par un deuxième dispositif (1) de dénudage.

14. Procédé d'entretien ou de démontage d'une ligne de courant, en particulier d'une ligne à haute tension, dans lequel on défait un câble (3) toronné ou une partie d'un câble (3) toronné de ses ancrages, par exemple d'ancrages à un pylône de ligne aérienne, on le retire, on le démonte par un procédé suivant l'une des revendications 9 à 13 et on enroule ensuite le segment (9) intérieur sur un dispositif de bobinage et dans lequel, de préférence, on effectue le retrait et le procédé de démontage du fil (3) toronné ou d'une partie du fil (3) toronné et un roulement sur le dispositif de bobinage en une passe opératoire.

15. Procédé suivant la revendication 14, **caractérisé en ce que** l'on fixe un fil toronné nouveau du côté, non tourné vers le dispositif (1) de dénudage, du fil (3) toronné ou d'une partie du fil (3) toronné, avant de le retirer.
